# EUROPÄISCHE PATENTSCHRIFT

(11) **EP 1 844 316 B1**
(45) Veröffentlichungstag und Bekanntmachung des Hinweises auf die Patenterteilung: **29.08.2018**
(21) Anmeldenummer: 06707714.9
(22) Anmeldetag: 13.01.2006
(51) Int. Cl.: G01N 15/06

(54) **SENSORELEMENT FÜR PARTIKELSENSOREN UND VERFAHREN ZUM BETRIEB DESSELBEN**
SENSOR ELEMENT FOR PARTICLE SENSORS AND METHOD FOR OPERATING THE SAME
ELEMENT DE DETECTION POUR DES CAPTEURS DE PARTICULES ET PROCEDE POUR L'EXPLOITER

(30) Priorität: 21.01.2005 DE 102005003118
(43) Veröffentlichungstag der Anmeldung: 17.10.2007
(73) Patentinhaber: ROBERT BOSCH GMBH, 70442 Stuttgart (DE)
(72) Erfinder: RÖSCH, Sabine, 71254 Ditzingen (DE); OCHS, Thorsten, 71701 Schwieberdingen (DE); KAMP, Bernhard, 71640 Ludwigsburg (DE); SCHITTENHELM, Henrik, 70180 Stuttgart (DE)
(86) Internationale Anmeldenummer: PCT/EP2006/050196
(87) Internationale Veröffentlichungsnummer: WO 2006/077197

(56) Entgegenhaltungen:
- DE-A1- 4 400 838
- US-A- 4 193 965
- US-A- 5 457 396
- US-A1- 2001 035 044
- US-A1- 2001 051 108
- US-A1- 2003 196 499
- BARETTINO D ET AL: "HOTPLATE-BASED MONOLITHIC CMOS MICROSYSTEMS FOR GAS DETECTION AND MATERIAL CHARACTERIZATION FOR OPERATING TEMPERATURES UP TO 500 DEG C" IEEE JOURNAL OF SOLID-STATE CIRCUITS, IEEE SERVICE CENTER, PISCATAWAY, NJ, US, Bd. 39, Nr. 7, Juli 2004 (2004-07), Seiten 1202-1207, XP001224126 ISSN: 0018-9200

## Beschreibung

Die Erfindung geht von einem Sensorelement und einem Verfahren zur Bestimmung der Konzentration von Partikeln in Gasgemischen sowie deren Verwendung gemäß der im Oberbegriff der unabhängigen Ansprüche definierten Art aus.

### Stand der Technik

Im Zuge einer sich verschärfenden Umweltgesetzgebung erlangen zunehmend Abgasnachbehandlungssysteme Bedeutung, die die Filtration bzw. Eliminierung von in Verbrennungsabgasen existierenden Rußpartikeln ermöglichen. Um die Funktionstüchtigkeit derartiger Abgasnachbehandlungssysteme zu überprüfen bzw. zu überwachen, werden Sensoren benötigt, mit denen auch im Langzeitbetrieb eine genaue Ermittlung der aktuell im Verbrennungsabgas vorliegenden Partikelkonzentration ermöglicht werden kann. Darüber hinaus soll mittels derartiger Sensoren eine Beladungsprognose beispielsweise eines in einem Abgassystem vorgesehenen Dieselpartikelfiltern ermöglicht werden, um eine hohe Systemsicherheit zu erreichen und dadurch kostengünstigere Filtermaterialien einsetzen zu können.

Aus der US 6,634,210 B1 ist ein Sensor zur Detektion von Stoffen in einem Fluidstrom bekannt, der auf der Basis eines keramischen Mehrlagensubstrats ausgeführt ist. Er umfasst zwei voneinander beabstandete Messelektroden, die dem zu untersuchenden Verbrennungsabgas ausgesetzt sind. Lagert sich zwischen den beiden Messelektroden Ruß ab, so kommt es beim Anlegen einer Spannung an die Messelektroden zu einem Stromfluss zwischen den Messelektroden. Ein schichtförmig ausgeführtes Heizelement ermöglicht es, die Elektroden bzw. deren Umgebung auf thermischem Wege von abgelagerten Rußpartikeln zu befreien. Der Sensor umfasst weiterhin ein Temperaturmesselement, mit dem die Temperatur des Sensors detektiert werden kann. Das Temperaturmesselement befindet sich innerhalb des Schichtverbundes des Sensors zwischen dem Heizelement und den Messelektroden. Nachteilig an diesem Aufbau des Sensors ist, dass die über das Temperaturmesselement ermittelte Temperatur nicht derjenigen Temperatur entspricht, die im Bereich der Messelektroden herrscht.
Aufgabe der vorliegenden Erfindung ist es, ein Sensorelement für Sensoren und ein Verfahren zur Bestimmung der Konzentration von Partikeln in Gasgemischen bereitzustellen, das eine genaue Temperaturregelung gestattet und dennoch kostengünstig ausgeführt werden kann.

### Vorteile der Erfindung

Das Sensorelement bzw. das Verfahren mit den kennzeichnenden Merkmalen der unabhängigen Ansprüche hat den Vorteil, dass die der Erfindung zugrundeliegende Aufgabe in vorteilhafter Weise gelöst wird. Dies beruht insbesondere auf dem einfachen Aufbau des Sensorelements und darauf, dass das Heizelement innerhalb des Sensorelements räumlich zwischen einer Messanordnung und einem Temperaturmesselement des Sensorelements angeordnet ist. Dabei ist eine symmetrische Anordnung des Temperaturmesselements bzw. der Messelektroden bezüglich der Lage des Heizelements innerhalb des Sensorelements bzw. bezüglich der Großflächen des Sensorelements vorgesehen.
Weitere vorteilhafte Ausführungsformen des vorliegenden Sensorelements bzw. Verfahrens zum Betrieb desselben ergeben sich aus den Unteransprüchen.
So ist es von Vorteil, wenn die Messelektroden vorzugsweise als ineinander verzahnte Interdigitalelektroden ausgeführt sind, da auf diese Weise der elektrische Widerstand bzw. die elektrische Leitfähigkeit großer Oberflächenbereiche unter definierten Bedingungen bestimmt werden kann und somit die Empfindlichkeit und die Güte der Messsignale deutlich verbessert wird.

In einer besonders vorteilhaften Ausführungsform der vorliegenden Erfindung ist eine Auswertevorrichtung vorgesehen, die eine Veränderung des zwischen den Messelektroden anliegenden Stromflusses ermittelt und dies als Maß für die Partikelkonzentration ausgibt.

Weiterhin ist von Vorteil, wenn die Messelektroden des Sensorelements in der selben Schichtebene angeordnet sind wie das Heizelement und/oder das Temperaturmesselement, da dadurch der Aufbau des Sensorelements deutlich vereinfacht werden kann.

Das Sensorelement bzw. das Verfahren zum Betrieb desselben ist in vorteilhafter Weise geeignet zur Überwachung der Betriebsweise eines Dieselmotors bzw. zur Überprüfung der Funktionstüchtigkeit oder des Beladungszustands eines Partikelfilters.

### Zeichnung

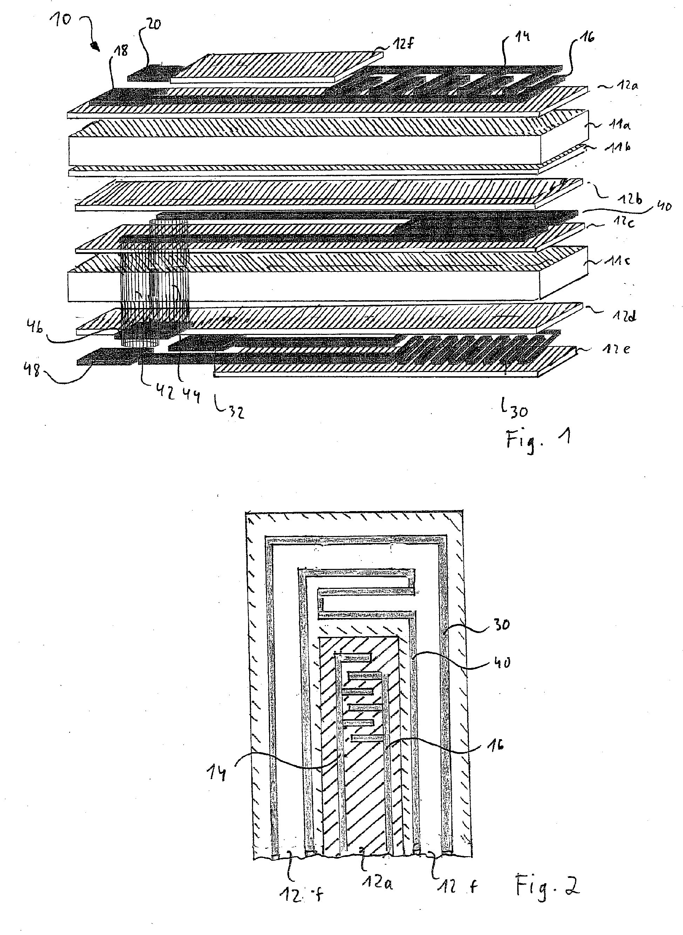

Zwei Ausführungsbeispiele des erfindungsgemäßen Sensorelements sind in der Zeichnung schematisch vereinfacht dargestellt und werden in der nachfolgenden Beschreibung näher erläutert. Dabei zeigt Figur 1 ein Sensorelement gemäß einem ersten Ausführungsbeispiel in einer Explosionsdarstellung und Figur 2 ein Sensorelement gemäß einem zweiten Ausführungsbeispiel in einer Aufsicht.

### Beschreibung der Ausführungsbeispiele

In Figur 1 ist ein prinzipieller Aufbau einer Ausführungsform der vorliegenden Erfindung dargestellt. Mit 10 ist ein keramisches Sensorelement bezeichnet, das der Bestimmung einer Partikelkonzentration, wie beispielsweise der Rußkonzentration, in einem das Sensorelement umgebenden Gasgemisch dient. Das Sensorelement 10 umfasst beispielsweise eine Mehrzahl von sauerstoffionenleitenden Festelektrolytschichten 11a, 11b und 11c. Die Festelektrolytschichten 11a und 11c werden dabei als keramische Folien ausgeführt und bilden einen planaren keramischen Körper. Sie bestehen aus einem sauerstoffionenleitenden Festelektrolytmaterial, wie beispielsweise mit Y₂O₃ stabilisiertem oder teilstabilisiertem ZrO₂.

Die Festelektrolytschicht 11b wird dagegen mittels Siebdruck eines pastösen keramischen Materials beispielsweise auf der Festelektrolytschicht 11a erzeugt. Als keramische Komponente des pastösen Materials wird dabei bevorzugt dasselbe Festelektrolytmaterial verwendet, aus dem auch die Festelektrolytschichten 11a, 11c bestehen.

Weiterhin weist das Sensorelement beispielsweise eine Vielzahl von elektrisch isolierenden keramischen Schichten 12a, 12b, 12c, 12d, 12e und 12f auf. Die Schichten 12a - 12f werden dabei ebenfalls mittels Siebdruck eines pastösen keramischen Materials beispielsweise auf den Festelektrolytschichten 11a, 11b, 11c erzeugt. Als keramische Komponente des pastösen Materials wird dabei beispielsweise bariumhaltiges Aluminiumoxid verwendet, da dieses auch bei Temperaturwechselbeanspruchungen über einen langen Zeitraum einen weitgehend konstant hohen elektrischen Widerstand aufweist. Alternativ ist auch die Verwendung von Cerdioxid bzw. der Zusatz anderer Erdalkalioxide möglich.

Die integrierte Form des planaren keramischen Körpers des Sensorelements 10 wird durch Zusammenlaminieren der mit der Festelektrolytschicht 11b und mit Funktionsschichten sowie den Schichten 12a - 12f bedruckten keramischen Folien und anschließendem Sintern der laminierten Struktur in an sich bekannter Weise hergestellt.

Das Sensorelement 10 weist weiterhin ein keramisches Heizelement 40 auf, das in Form einer elektrischen Widerstandsleiterbahn ausgeführt ist und der Aufheizung des Sensorelementes 10 insbesondere auf die Temperatur des zu bestimmenden Gasgemischs bzw. zum Abbrand der auf den Großflächen des Sensorelements 10 abgelagerten Rußpartikel dient. Die Widerstandsleiterbahn ist vorzugsweise aus einem Cermet-Material ausgeführt; vorzugsweise als Mischung von Platin oder einem Platinmetall mit keramischen Anteilen, wie beispielsweise Aluminiumoxid. Die Widerstandsleiterbahn ist weiterhin vorzugsweise in Form eines Mäanders ausgebildet und weist an beiden Enden Durchkontaktierungen 42, 44 sowie elektrische Anschlüsse 46, 48 auf. Durch Anlegen einer entsprechenden Heizspannung an die Anschlüsse 46, 48 der Widerstandsleiterbahn kann die Heizleistung des Heizelementes 40 entsprechend reguliert werden.

Auf einer Großfläche des Sensorelements 10 sind beispielsweise zwei Messelektroden 14, 16 aufgebracht, die vorzugsweise als ineinander verzahnte Interdigitalelektroden ausgebildet sind. Die Verwendung von Interdigitalelektroden als Messelektroden 14, 16 ermöglicht vorteilhafter Weise eine besonders genaue Bestimmung des elektrischen Widerstandes bzw. der elektrischen Leitfähigkeit des sich zwischen den Messelektroden 14, 16 befindenden Oberflächenmaterials. Zur Kontaktierung der Messelektroden 14, 16 sind im Bereich eines dem Gasgemisch abgewandten Ende des Sensorelements Kontaktflächen 18, 20 vorgesehen. Dabei sind die Zuleitungsbereiche der Elektroden 14, 16 vorzugsweise durch eine weitere, elektrisch isolierende, keramische Schicht 12f gegenüber den Einflüssen eines das Sensorelement 10 umgebenden Gasgemischs abgeschirmt.

Auf der mit den Messelektroden 14, 16 versehenen Großfläche des Sensorelements 10 kann zusätzlich eine aus Übersichtlichkeitsgründen nicht dargestellte poröse Schicht vorgesehen sein, die die Messelektroden 14, 16 in ihrem ineinander verzahnten Bereich gegenüber einem direkten Kontakt mit dem zu bestimmenden Gasgemisch abschirmt. Dabei ist die Schichtdicke der porösen Schicht vorzugsweise größer als die Schichtdicke der Messelektroden 14, 16. Die poröse Schicht ist vorzugsweise offenporös ausgeführt, wobei die Porengröße so gewählt wird, dass die zu bestimmenden Partikel im Gasgemisch in die Poren der porösen Schicht eindiffundieren können. Die Porengröße der porösen Schicht liegt dabei vorzugsweise in einem Bereich von 2 bis 10 µm. Die poröse Schicht ist aus einem keramischen Material ausgeführt, das vorzugsweise dem Material der Schicht 12a ähnlich ist oder diesem entspricht und kann mittels Siebdruck hergestellt werden. Die Porosität der porösen Schicht kann durch Zusatz von Porenbildnern zu der Siebdruckpaste entsprechend eingestellt werden.

Während des Betriebs des Sensorelementes 10 wird an die Messelektroden 14, 16 eine Spannung angelegt. Da die Messelektroden 14, 16 auf der Oberfläche der elektrisch isolierenden Schicht 12a angeordnet sind, kommt es zunächst im wesentlichen zu keinem Stromfluss zwischen den Messelektroden 14, 16.

Enthält ein das Sensorelement 10 umströmendes Gasgemisch Partikel, insbesondere Ruß, so lagern sich diese auf der Oberfläche des Sensorelementes 10 ab. Durch die offenporige Struktur der porösen Schicht diffundieren die Partikel durch die poröse Schicht hindurch bis in unmittelbare Nähe der Messelektroden 14, 16. Da Ruß eine bestimmte elektrische Leitfähigkeit aufweist, kommt es bei ausreichender Beladung der Oberfläche des Sensorelementes 10 bzw. der porösen Schicht mit Ruß zu einem ansteigenden Stromfluss zwischen den Messelektroden 14, 16, der mit dem Ausmaß der Beladung korreliert.

Wird nun an die Messelektroden 24, 26 eine vorzugsweise konstante Gleich- oder Wechselspannung angelegt und der zwischen den Messelektroden 24, 26 auftretende Stromfluss ermittelt, so kann aus dem Integral des Stromflusses über der Zeit auf die abgelagerte Partikelmasse bzw. auf den aktuellen Partikelmassenstrom, insbesondere Rußmassenstrom, und auf die Partikelkonzentration im Gasgemisch geschlossen werden. Mit dieser Messmethode wird die Konzentration all derjenigen Partikel in einem Gasgemisch erfasst, die die elektrische Leitfähigkeit des sich zwischen den Messelektroden 24, 26 befindenden keramischen Materials positiv oder negativ beeinflussen.
Eine weitere Möglichkeit besteht darin, den Anstieg des Stromflusses über der Zeit zu ermitteln und aus dem Quotienten aus Stromflussanstieg und Zeit bzw. aus dem Differentialquotienten aus Stromfluss nach der Zeit auf die abgelagerte Partikelmasse bzw. auf den aktuellen Partikelmassenstrom, insbesondere Rußmassenstrom, und auf die Partikelkonzentration im Gasgemisch zu schließen. Eine Berechnung der Partikelkonzentration ist auf der Basis der Messwerte möglich, sofern die Strömungsgeschwindigkeit des Gasgemisches bekannt ist. Diese bzw. der Volumenstrom des Gasgemisches kann bspw. mittels eines geeigneten weiteren Sensors bestimmt werden.
Darüber hinaus umfasst das Sensorelement 10 ein Temperaturmesselement 30, das vorzugsweise in Form einer elektrischen Widerstandsleiterbahn ausgeführt ist. Die Widerstandsleiterbahn ist beispielsweise aus einem ähnlichen oder dem selben Material ausgeführt, wie das der Widerstandsleiterbahn des Heizelementes 40. Die Widerstandsleiterbahn des Temperaturmesselementes 30 ist vorzugsweise in Form eines Mäanders ausgeführt, wobei einer der Anschlüsse der Widerstandsleiterbahn vorzugsweise über den Anschluss 48 auf Masse gelegt ist. Weiterhin weist das Temperaturmesselement 30 einen weiteren elektrischen Anschluss 32 auf. Durch Anlegen einer entsprechenden Spannung an die Anschlüsse 32, 48 der Widerstandsleiterbahn und durch Bestimmen des elektrischen Widerstandes derselben kann auf die Temperatur des Sensorelements geschlossen werden. Alternativ ist eine Temperaturbestimmung mittels Thermoelementen möglich. Eine zusätzliche Möglichkeit der Tempraturmessung besteht darin, die per se temperaturabhängige Leitfähigkeit des zwischen der Widerstandsleiterbahn des Temperaturmesselements 32 und den Messelektroden 24, 26 angeordneten keramischen Körpers zu bestimmen und aus dessen Höhe auf die Temperatur des Sensorelementes zu schließen.
Der mittels den Messelektroden 14, 16 bestimmte elektrische Widerstand des zwischen den Messelektroden 14, 16 sich befindenden Materials unterliegt einer starken Temperaturabhängigkeit. Insofern ist eine möglichst exakte Bestimmung der im Bereich der Messelektroden 14, 16 auftretenden Sensortemperatur eine wichtige Voraussetzung für den Erhalt verwertbarer Messergebnisse. Da aus räumlichen Gründen jedoch eine Temperaturbestimmung im unmittelbaren Bereich der Messelektroden 14, 16 oft nicht realisierbar ist, werden die Messelektroden 14, 16, das Heizelement 40 und das Temperaturmesselement 30 innerhalb des Sensorelementes 10 räumlich so angeordnet, dass das Heizelement 40 in einer Schichtebene angeordnet ist, die sich zwischen der die Messelektroden 14, 16 enthaltenden Schichtebene und der das Temperaturmesselement 30 enthaltenden Schichtebene befindet. Insbesondere dann, wenn die Messelektroden 14, 16 und das Temperaturmesselement 30 dabei im wesentlichen den gleichen Abstand bezüglich dem Heizelement 40 aufweisen, sind zwar die Messelektroden 14, 16 und das Temperaturmesselement 30 in verschiedenen Bereichen des Sensorelementes 10 angeordnet, durch einen im wesentlichen vergleichbaren Abstand der Messelektroden 14, 16 bzw. des Temperaturelements 30 vom Heizelement 40 kann jedoch unterstellt werden, dass an den Messelektroden 14, 16 eine vergleichbare Temperatur herrscht, wie sie vom Temperaturmesselement 30 erfasst wird. Durch eine räumliche Anordnung des Heizelementes 40 zwischen den Messelektroden 14, 16 und dem Temperaturmesselement 30, bei einer symmetrischen bzw. äquidistanten Anordnung des Heizelementes 40 bezüglich der Messelektroden 14, 16 und dem Temperaturmesselement 30, kann durch eine Temperaturbestimmung mit dem Temperaturmesselement 30 wirksam ein Rückschluss auf die Temperatur der Messelektroden 14, 16 gezogen werden. Dies ermöglicht eine effektive Berücksichtigung der aktuellen Temperatur des Sensorelements bei der Bestimmung des elektrischen Widerstandes über die Messelektroden 14, 16.
In Figur 2 ist ein Sensorelement gemäß einem zweiten Ausführungsbeispiel dargestellt. Dabei bezeichnen weiterhin gleiche Bezugszeichen gleiche Bauteilkomponenten wie in Figur 1.
Das in einer Aufsicht dargestellte Sensorelement gemäß einem zweiten Ausführungsbeispiel stellt eine weitere Möglichkeit dar, wie eine Anordnung des Heizelementes 40 zwischen den Messelektroden 14, 16 einerseits und dem Temperaturmesselement 30 andererseits realisiert werden kann. Dabei sind auf der elektrisch isolierenden Schicht 12a sowohl die Elektroden 14, 16 als auch das Heizelement 40 und das Temperaturmesselement 30 aufgebracht. Das Heizelement 40 ist dabei räumlich in der selben Schichtebene des Sensorelements zwischen der Widerstandsleiterbahn des Temperaturmesselementes 30 und den Messelektroden 14, 16 angeordnet. Dies erfolgt vorzugsweise so, dass zumindest der heizende Bereich des Heizelements 40 im wesentlichen den gleichen Abstand zu den Messelektroden 14, 16 aufweist wie zum Temperaturmesselement 30. Auf diese Weise wird eine symmetrische bzw. äquidistante Anordnung des Heizelementes 40 bezüglich der Messelektroden 14, 16 und dem Temperaturmesselement 30 erreicht; weiterhin kann der Schichtaufbau auf wenige keramische Schichten reduziert werden. Vorzugsweise sind jedoch die Widerstandleiterbahnen von Heiz- und Temperaturmesselement 30, 40 mit der weiteren keramischen Schicht 12f gegenüber korrosiven Einflüssen des zu bestimmenden Gasgemischs abgedeckt.

Die vorliegende Erfindung ist nicht auf die in den Figuren 1 und 2 dargestellten Ausführungsformen eines Sensorelements beschränkt, sondern es können zahlreiche Abwandlungen dieses Sensorelements vorgenommen werden. So ist es beispielsweise möglich, zusätzliche keramische Schichten im Sensorelement vorzusehen oder den Mehrschichtaufbau des Sensorelements anwendungsbezogen zu vereinfachen, sowie weitere Messelektroden vorzusehen. Auch die Verwendung mehrerer Heiz- und Temperaturmesselemente ist möglich.

Die Anwendung des beschriebenen Sensorelements ist nicht auf die Bestimmung von Rußpartikeln in Abgasen von Verbrennungsmotoren beschränkt, sondern es kann allgemein zur Bestimmung der Konzentration von Partikeln, die die elektrische Leitfähigkeit eines keramischen Substrats bei Einlagerung verändern, beispielsweise in chemischen Herstellungsprozessen oder Abluftnachbehandlungsanlagen, eingesetzt werden.

## Patentansprüche

1. Sensorelement für Gassensoren zur Bestimmung der Konzentration von Partikeln in Gasgemischen, insbesondere Rußsensoren, mit mindestens einer dem zu bestimmenden Gas ausgesetzten Messanordnung, die eine erste und eine zweite Messelektrode (14, 16) umfasst, mit denen ein elektrischer Widerstand bestimmbar ist, mindestens einem in das Sensorelement (10) integrierten Heizelement (40) und mindestens einem in das Sensorelement (10) integrierten Temperaturmesselement (30), wobei das Sensorelement (10) als planarer keramischer Körper in einem Mehrschichtaufbau ausgeführt ist,
**dadurch gekennzeichnet,**
**dass** das Heizelement (40) innerhalb des Sensorelements (10) räumlich zwischen der Messanordnung (14, 16) und dem Temperaturmesselement (30) angeordnet ist, wobei das Heizelement (40) äquidistant zu den Messelektroden (14,16) und dem Temperaturmesselement (30) angeordnet ist.

2. Sensorelement für Gassensoren zur Bestimmung der Konzentration von Partikeln in Gasgemischen, insbesondere Rußsensoren, mit mindestens einer dem zu bestimmenden Gas ausgesetzten Messanordnung, die eine erste und eine zweite Messelektrode (14, 16) umfasst, mit denen ein elektrischer Widerstand bestimmbar ist, mindestens einem in das Sensorelement (10) integrierten Heizelement (40) und mindestens einem in das Sensorelement (10) integrierten Temperaturmesselement (30), wobei das Sensorelement (10) als planarer keramischer Körper in einem Mehrschichtaufbau ausgeführt ist,
**dadurch gekennzeichnet,**
**dass** die Messanordnung (14, 16) und das Temperaturmesselement (30) äquidistant zum Heizelement (40) des Sensorelementes (10) angeordnet sind und dass die erste und die zweite Messelektrode (14, 16) in der selben Schichtebene angeordnet ist wie das Heizelement (40) und das Temperaturmesselement (30).

3. Sensorelement nach Anspruch 1 oder 2, **dadurch gekennzeichnet, dass** die erste und die zweite Messelektrode (14, 16) als Interdigitalelektrode ausgeführt ist.

4. Sensorelement nach einem der Ansprüche 1 bis 3, **dadurch gekennzeichnet, dass** die erste und die zweite Messelektrode (14, 16) auf einem elektrisch isolierenden Substrat (12a) angeordnet sind, wobei das elektrisch isolierende Substrat Aluminiumoxid und/oder Erdalkalioxide enthält.

5. Sensorelement nach einem der vorhergehenden Ansprüche, **dadurch gekennzeichnet, dass** eine Auswertevorrichtung vorgesehen ist, die eine Veränderung des zwischen den Messelektroden (14, 16) anliegenden Stromflusses und/oder Widerstandes ermittelt und dies als Maß für die Partikelkonzentration ausgibt.

6. Verfahren zur Bestimmung der Konzentration von Partikeln in Gasgemischen, insbesondere von Ruß in Abgasen von Verbrennungsmotoren, mittels eines Sensorelements (10) nach einem der vorhergehenden Ansprüchen, wobei an mindestens zwei Messelektroden (14, 16) eine Spannung angelegt wird und der sich zwischen den Messelektroden (14, 16) einstellende Stromfluss bestimmt wird und als Maß für die Partikelkonzentration ausgegeben wird.

7. Verfahren nach Anspruch 6, **dadurch gekennzeichnet, dass** eine Regenerierung des Sensorelements (10) eingeleitet wird, sobald der sich zwischen den Messelektroden (14, 16) einstellende Stromfluss einen vorbestimmten Wert überschreitet und/oder für einen vorbestimmten Zeitraum einen konstanten Wert annimmt.

8. Verwendung eines Sensorelements nach einem der Ansprüche 1 bis 5 oder eines Verfahrens nach einem der Ansprüche 6 oder 7 zur Überwachung der Betriebsweise eines Dieselmotors oder der Funktionstüchtigkeit und/oder des Beladungszustands eines Partikelfilters.

## Claims

1. Sensor element for gas sensors for determining the concentration of particles in gas mixtures, in particular soot sensors, having at least one measuring arrangement which is exposed to the gas which is to be determined and comprises a first and a second measuring electrode (14, 16) it being possible to determine an electrical resistance using the said first and the said second measuring electrode, at least one heating element (40) which is integrated into the sensor element (10) and at least one temperature measuring element (30) which is integrated into the sensor element (10), wherein the sensor element (10) is designed as a planar ceramic body of multilayer construction,
**characterized**
**in that** the heating element (40) is arranged physically between the measuring arrangement (14, 16) and the temperature measuring element (30) within the sensor element (10), wherein the heating element (40) is arranged equidistantly in relation to the measuring electrodes (14, 16) and the temperature measuring element (30).

2. Sensor element for gas sensors for determining the concentration of particles in gas mixtures, in particular soot sensors, having at least one measuring arrangement which is exposed to the gas which is to be determined and comprises a first and a second measuring electrode (14, 16) it being possible to determine an electrical resistance using the said first and the said second measuring electrode, at least one heating element (40) which is integrated into the sensor element (10) and at least one temperature measuring element (30) which is integrated into the sensor element (10), wherein the sensor element (10) is designed as a planar ceramic body of multilayer construction,
**characterized**
**in that** the measuring arrangement (14, 16) and the temperature measuring element (30) are arranged equidistantly in relation to the heating element (40) of the sensor element (10), and in that the first and the second measuring electrode (14, 16) are arranged in the same layer plane as the heating element (40) and the temperature measuring element (30).

3. Sensor element according to Claim 1 or 2, **characterized in that** the first and the second measuring electrode (14, 16) are designed as interdigital electrodes.

4. Sensor element according to one of Claims 1 to 3, **characterized in that** the first and the second measuring electrode (14, 16) are arranged on an electrically insulating substrate (12a), wherein the electrically insulating substrate contains aluminium oxide and/or alkaline earth oxides.

5. Sensor element according to one of the preceding claims, **characterized in that** an evaluation apparatus is provided, the said evaluation apparatus ascertaining a variation in the current flow and/or resistance which is present between the measuring electrodes (14, 16), and outputs this as a measure of the particle concentration.

6. Method for determining the concentration of particles in gas mixtures, in particular of soot in exhaust gases from internal combustion engines, by means of a sensor element (10) according to one of the preceding claims, wherein a voltage is applied to at least two measuring electrodes (14, 16) and the current flow which is established between the measuring electrodes (14, 16) is determined and is output as a measure of the particle concentration.

7. Method according to Claim 6, **characterized in that** regeneration of the sensor element (10) is initiated as soon as the current flow which is established between the measuring electrodes (14, 16) exceeds a predetermined value and/or assumes a constant value for a predetermined period of time.

8. Use of a sensor element according to one of Claims 1 to 5 or of a method according to one of Claims 6 and 7 for monitoring the manner of operation of a diesel engine or the operational reliability and/or the loading state of a particle filter.

## Revendications

1. Élément de détection pour détecteurs de gaz destiné à déterminer la concentration de particules dans des mélanges gazeux, notamment pour détecteurs de suie, comprenant au moins un agencement de mesure exposé au gaz à déterminer et comprenant une première et une deuxième électrode de mesure (14, 16) avec lesquelles peut être déterminée une résistance électrique, au moins un élément chauffant (40) intégré dans l'élément de détection (10) et au moins un élément de mesure de température (30) intégré dans l'élément de détection (10), l'élément de détection (10) étant réalisé sous forme de corps en céramique plan de construction à plusieurs couches,
**caractérisé en ce que** l'élément chauffant (40) est disposé à l'intérieur de l'élément de détection (10) spatialement entre l'agencement de mesure (14, 16) et l'élément de mesure de température (30), l'élément chauffant (40) étant disposé de manière équidistante par rapport aux électrodes de mesure (14, 16) et à l'élément de mesure de température (30).

2. Élément de détection pour détecteurs de gaz destiné à déterminer la concentration de particules dans des mélanges gazeux, notamment pour détecteurs de suie, comprenant au moins un agencement de mesure exposé au gaz à déterminer et comprenant une première et une deuxième électrode de mesure (14, 16) avec lesquelles peut être déterminée une résistance électrique, au moins un élément chauffant (40) intégré dans l'élément de détection (10) et au moins un élément de mesure de température (30) intégré dans l'élément de détection (10), l'élément de détection (10) étant réalisé sous forme de corps en céramique plan de construction à plusieurs couches,
**caractérisé en ce que** l'agencement de mesure (14, 16) et l'élément de mesure de température (30) sont disposés de manière équidistante par rapport à l'élément chauffant (40) de l'élément de capteur (10) et **en ce que** la première et la deuxième électrode de mesure (14, 16) sont disposées dans le même plan de stratification que l'élément chauffant (40) et l'élément de mesure de température (30).

3. Élément de détection selon la revendication 1 ou 2, **caractérisé en ce que** la première et la deuxième électrode de mesure (14, 16) sont réalisées sous la forme d'une électrode interdigitée.

4. Élément de détection selon l'une des revendications 1 à 3, **caractérisé en ce que** la première et la deuxième électrode de mesure (14, 16) sont disposées sur un substrat (12a) électriquement isolant, le substrat électriquement isolant contenant de l'oxyde d'aluminium et/ou des oxydes alcalinoterreux.

5. Élément de détection selon l'une des revendications précédentes, **caractérisé en ce qu'**il est prévu un dispositif d'interprétation, lequel détermine une modification du flux de courant et/ou de la résistance présent(e) entre les électrodes de mesure (14, 16) et délivre celle-ci en tant que mesure de la concentration de particules.

6. Procédé de détermination de la concentration de particules dans des mélanges gazeux, notamment de suie dans les gaz d'échappement de moteurs à combustion interne, à l'aide d'un élément de détection (10) selon l'une des revendications précédentes, une tension étant appliquée à au moins deux électrodes de mesure (14, 16) et le flux de courant qui s'établit entre les électrodes de mesure (14, 16) étant déterminé et délivré en tant que mesure de la concentration de particules.

7. Procédé selon la revendication 6, **caractérisé en ce qu'**une régénération de l'élément de détection (10) est initiée dès que le flux de courant qui s'établit entre les électrodes de mesure (14, 16) dépasse une valeur prédéfinie et/ou adopte une valeur constante pendant une période prédéfinie.

8. Utilisation d'un élément de détection selon l'une des revendications 1 à 5 ou d'un procédé selon l'une des revendications 6 ou 7 pour surveiller le mode de fonctionnement d'un moteur diesel ou l'aptitude au fonctionnement et/ou l'état de charge d'un filtre à particules.
